# EUROPEAN PATENT SPECIFICATION

(11) **EP 4 170 750 B1**
(45) Date of publication and mention of the grant of the patent: **25.03.2026**
(21) Application number: 21880433.4
(22) Date of filing: 08.10.2021
(51) Int. Cl.: H01M 4/134, H01M 4/131, H01M 4/62, H01M 4/38, H01M 4/48, H01M 10/058, H01M 50/446, H01M 50/449, H01M 4/04, H01M 4/1395, H01M 10/052, H01M 4/02

(54) **NEGATIVE ELECTRODE FOR LITHIUM SECONDARY BATTERY, LITHIUM SECONDARY BATTERY INCLUDING THE SAME, AND METHOD FOR MANUFACTURING LITHIUM SECONDARY BATTERY**
NEGATIVE ELEKTRODE FÜR EINE LITHIUM-SEKUNDÄRBATTERIE, LITHIUM-SEKUNDÄRBATTERIE MIT DIESER ELEKTRODE UND VERFAHREN ZUR HERSTELLUNG EINER LITHIUM-SEKUNDÄRBATTERIE
ELECTRODE NEGATIVE POUR BATTERIE SECONDAIRE AU LITHIUM, BATTERIE SECONDAIRE AU LITHIUM COMPRENANT CETTE ELECTRODE, ET PROCEDE DE FABRICATION DE BATTERIE SECONDAIRE AU LITHIUM

(30) Priority: 13.10.2020 KR 20200132199
(43) Date of publication of application: 26.04.2023
(73) Proprietor: LG Energy Solution, Ltd., Seoul 07335 (KR)
(72) Inventor: KIM, Young-Jae, Daejeon 34122 (KR); KIM, Min-Ji, Daejeon 34122 (KR); CHAE, Jong-Hyun, Daejeon 34122 (KR)
(74) Representative: Hoffmann Eitle
(86) International application number: PCT/KR2021/013949
(87) International publication number: WO 2022/080786

(56) References cited:
- JP-A- 2013 084 377
- JP-A- 2020 095 812
- JP-A- 2020 095 812
- JP-B2- 6 763 410
- KR-A- 20180 049 401
- KR-A- 20200 019 390
- KR-A- 20200 078 416
- US-A1- 2010 285 368
- US-A1- 2020 144 597
- US-B2- 10 243 189
- US-B2- 10 270 077

## Description

### TECHNICAL FIELD

The present application claims priority to Korean Patent Application No. 10-2020-0132199 filed on October 13, 2020 in the Republic of Korea.

The present disclosure relates to a negative electrode for a lithium secondary battery, a lithium secondary battery including the same, and a method for manufacturing the lithium secondary battery.

### BACKGROUND ART

Recently, energy storage technology has been given an increasing attention. As the application of energy storage technology has been extended to energy for cellular phones, camcorders and notebook PC and even to energy for electric vehicles, there has been an increasing need for providing batteries used as power sources for such electronic instruments with higher energy density. Lithium secondary batteries are those satisfying such a need best, and thus active studies have been made about such lithium secondary batteries.

In general, a lithium secondary battery includes a positive electrode including a lithium metal oxide, a negative electrode including a carbonaceous material, etc., an electrolyte containing a lithium salt and an organic solvent, and a separator interposed between the positive electrode and the negative electrode so that both electrodes may be insulated electrically from each other.

Carbonaceous materials have been used frequently as negative electrode materials forming the negative electrode of a lithium secondary battery. However, as the use of a lithium secondary battery has been extended, a high-capacity lithium secondary battery has been increasingly in demand. Therefore, there is a need for a high-capacity negative electrode active material capable of substituting for a carbonaceous material having low capacity. To meet such a need, there has been an attempt to use Si, having higher charge/discharge capacity as compared to carbonaceous materials and capable of electrochemical alloying with lithium, as a negative electrode active material.

However, the Si-based negative electrode active material has a serious problem in that it undergoes a significant change in volume due to lithium-ion intercalation and deintercalation during charge/discharge. The Si-based negative electrode active material undergoes volumetric swelling to 300% or more by charging, and the mechanical stress applied herein generates cracks inside of and on the surface of the active material. In addition, when lithium ions are deintercalated by discharging, the Si-based negative electrode active material is shrunk. Since the cracks are not recovered again, repetition of charge/discharge cycles causes pulverization of the active material, and thus the negative electrode active material may be detached from the negative electrode current collector, or the negative electrode active material particles are detached from one another to form a dead volume causing an electrical short-circuit. Therefore, it is known that the Si-based negative electrode active material causes a rapid decrease in charge/discharge capacity, as charge/discharge cycles proceed. In addition, side reactions with an electrolyte occur, while the interface where the active material is exposed is increased by the cracks, resulting in continuous consumption of lithium ions and electrolyte.

Under these circumstances, there is an imminent need for technology capable of preventing the problem caused by a volumetric change of the Si-based negative electrode active material.

US 10,270,077 B2 is concerned with a separator having a shutdown function to improve overcharge resistance characteristics, wherein the separator includes a porous resin layer made of polyolefin with a melting point of 80 °C or more and 135 °C or less.

US 2010/0285368 A1 is concerned with the provision of a lithium ion battery, whose negative electrode active material layer is provided as an array of a plurality of columnar bodies covered with first and second polymer layers to improve adhesion. JP 2020 095812 A is concerned with a lithium-ion battery.

### DISCLOSURE

### Technical Problem

The present disclosure is designed to solve the problems of the related art, and therefore the present disclosure is directed to providing a lithium secondary battery including a negative electrode capable of preventing the problems caused by a volumetric change in the negative electrode active material.

The present disclosure is also directed to providing a method for manufacturing the lithium secondary battery.

### Technical Solution

The present invention is as set out in the appended claims.

In one aspect of the present disclosure, there is provided a lithium secondary battery.

In another aspect of the present disclosure, there is provided a method for manufacturing a lithium secondary battery.

### Advantageous Effects

The negative electrode for a lithium secondary battery according to an embodiment of the present disclosure includes a binder polymer present in the cracks formed in a Si-based negative electrode active material after activating, and the binder polymer connects the cracks to provide improved durability, and thus a lithium secondary battery including the negative electrode may provide improved life characteristics.

The method for manufacturing a lithium secondary battery according to an embodiment of the present disclosure includes heating a battery to a temperature where a second binder polymer is dissolved in an electrolyte so that the second binder polymer may be present in the cracks formed in a Si-based negative electrode active material after activating, and thus may provide a lithium secondary battery with improved durability and life characteristics.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic view illustrating the negative electrode for a lithium secondary battery according to an embodiment of the present disclosure.
FIG. 2 is an extended view illustrating the Si-based negative electrode active material in the negative electrode for a lithium secondary battery according to an embodiment of the present disclosure.
FIG. 3 is a schematic flow chart illustrating the method for manufacturing a lithium secondary battery according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In one aspect of the present disclosure, there is provided a lithium secondary battery comprising a positive electrode, a negative electrode, and a separator interposed between the positive electrode and the negative electrode, and comprising a porous polymer substrate, and a porous coating layer disposed on at least one surface of the porous polymer substrate and comprising a plurality of inorganic particles and a second binder polymer; the negative electrode including:
a negative electrode current collector; and
a negative electrode active material layer disposed on at least one surface of the negative electrode current collector, and including a Si-based negative electrode active material, a conductive material and a first binder polymer,
wherein the Si-based negative electrode active material has cracks formed after activating,
a second binder polymer is coated in the cracks, and
the first binder polymer and the second binder polymer are heterogeneous as defined below in more detail.

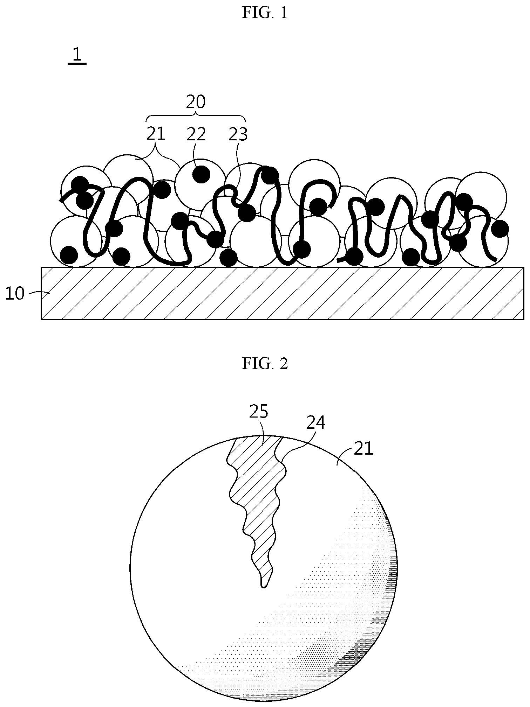

FIG. 1 is a schematic view illustrating the negative electrode for a lithium secondary battery according to an embodiment of the present disclosure.

Referring to FIG. 1, the negative electrode 1 for a lithium secondary battery includes a negative electrode current collector 10.

The negative electrode current collector 10 is not particularly limited, as long as it includes a material used conventionally for a negative electrode current collector. According to an embodiment of the present disclosure, the negative electrode current collector 10 may include foil made of copper, gold, nickel, copper alloy, or two or more of them.

According to an embodiment of the present disclosure, the thickness of the negative electrode current 10 is not particularly limited, but the negative electrode current collector may have a thickness of 3-500 µm.

Referring to FIG. 1, the negative electrode 1 for a lithium secondary battery includes a negative electrode active material layer 20 on at least one surface of the negative electrode current collector 10. The negative electrode active material layer 20 includes a Si-based negative electrode active material 21, a conductive material 22 and a first binder polymer 23.

According to the present disclosure, the Si-based negative electrode material 21 may be provided in the form of particles.

According to an embodiment of the present disclosure, the Si-based negative electrode active material 21 may include Si, SiOₓ (1≤x≤2), Si/C, or two or more of them.

According to an embodiment of the present disclosure, when the Si-based negative electrode active material 21 is provided in the form of particles, the negative electrode active material 21 may have an average particle diameter of 0.5-5 µm, 1-4 µm, or 2-3 µm. The average particle diameter of the Si-based negative electrode active material 21 means a particle diameter (D₅₀) corresponding to 50% of the accumulated value from smaller particles calculated based on the results of determining the particle size distribution of the particles after classification using a general particle size distribution analyzer. The average particle diameter of the Si-based negative electrode active material may be generally determined by using X-ray diffractometry (XRD) or by using electronic microscopes (SEM, TEM), or the like. When the Si-based negative electrode active material satisfies the above-defined range, pulverization of the Si-based negative electrode active material caused by a continuous change in volume of the Si-based negative electrode active material, particularly continuous swelling and shrinking thereof, may be further reduced, and the specific area may be increased to improve output characteristics.

The conductive material 22 is not particularly limited, as long as it has conductivity, while not causing any chemical change in the corresponding battery. According to an embodiment of the present disclosure, the conductive material 22 may include: carbon black, such as carbon black, acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives; or two or more of them.

According to the present disclosure, the first binder polymer 23 binds the Si-based negative electrode active material 21 and the conductive material 22 with each other, and binds the Si-based negative electrode active material 21 and/or conductive material 22 and the negative electrode current collector 10 with each other. The first binder polymer is not dissolved in an electrolyte at the heating temperature described hereinafter.

The first binder polymer 23 includes polyvinyl alcohol, carboxymethyl cellulose (CMC), starch, hydroxypropyl cellulose, polyvinyl pyrrolidone, polytetrafluoroethylene, styrene butadiene rubber (SBR), or two or more of them.

Referring to FIG. 1, it is shown that the first binder polymer 23 is in linear contact with the Si-based negative electrode active material 21, the conductive material 22 and the negative electrode current collector 10, but the scope of the present disclosure is not limited thereto. For example, the first binder polymer 23 may be in dot-like contact with the Si-based negative electrode active material 21, the conductive material 22 and the negative electrode current collector 10.

FIG. 2 is an extended view illustrating the Si-based negative electrode active material in the negative electrode for a lithium secondary battery according to an embodiment of the present disclosure.

Referring to FIG. 2, cracks 24 are formed in the Si-based negative electrode active material 21 after an activating. A second binder polymer 25 is coated in the cracks 24.

According to the present disclosure, the expression 'a second binder polymer is coated in the cracks' means that the second binder polymer exists in the vacant spaces of the cracks. For example, this covers the second binder polymer coated in the cracks or inserted in the cracks, and also covers the second binder polymer with which the cracks are filled completely.

The Si-based negative electrode active material 21 undergoes a severe volumetric change due to lithium-ion intercalation and deintercalation during charge/discharge. Due to such a volumetric change, the pores of the Si-based negative active material are increased, as a lithium secondary battery repeats cycles, resulting in formation of cracks 24. The negative electrode active material is pulverized due to such cracks 24 so that the negative electrode active material may be detached from the negative electrode current collector and/or the negative electrode active material particles are detached from one another to cause degradation of conductivity between the negative electrode active material and the current collector and/or among the negative electrode active material particles. As a result, this may cause degradation of the charge/discharge capacity of a lithium secondary battery, resulting in degradation of the life characteristics of the lithium secondary battery.

According to the present invention, the second binder polymer 25 is present in the cracks 24 to form a connection in the cracks. While the first binder polymer 23 interconnects the adjacent Si-based negative electrode active materials, the second binder polymer 25 is disposed in the cracks 24 formed in each Si-based negative electrode active material to form a connection in the cracks. **In** the negative electrode according to an embodiment of the present disclosure, the second binder polymer 25 connects the cracks, even when the cracks are formed in the negative electrode active material, and thus it is possible to prevent the negative electrode active material from being pulverized by the cracks, resulting in improvement of the durability of the negative electrode. Therefore, it is possible to improve the life characteristics of a lithium secondary battery including the negative electrode.

According to the present disclosure, the first binder polymer 23 and the second binder polymer 25 are heterogeneous polymers. When the first binder polymer 23 and the second binder polymer 25 are heterogeneous, it is possible to prevent the negative electrode active material from being detached from the negative electrode current collector to cause an internal short-circuit, while the second binder polymer may be coated in the cracks formed in the Si-based negative electrode active material after an activating.

According to an embodiment of the present disclosure, the second binder polymer 25 includes a copolymer of a first monomer derived from vinylidene fluoride (VDF) and a second monomer derived from hexafluoropropylene (HFP). When using polyvinylidene fluoride-co-hexafluoropropylene as the second binder polymer, it shows excellent adhesion so that the cracks 24 may be connected well. Herein, the second monomer is present in an amount of 20 wt% or more, preferably of 30 wt% or more, based on 100 wt% of the copolymer. When the second monomer is present within the above-defined range, the copolymer of the first monomer derived from vinylidene fluoride (VDF) with the second monomer derived from hexafluoropropylene (HFP) may be coated with ease in the cracks formed in the Si-based negative electrode active material after an activating.

The negative electrode for a lithium secondary battery according to an embodiment of the present disclosure may be obtained by the method for manufacturing a lithium secondary battery as described hereinafter, but it not limited thereto.

The negative electrode for a lithium secondary battery according to an embodiment of the present disclosure may be used to manufacture a lithium secondary battery together with a positive electrode and a separator.

The positive electrode applied to the lithium secondary battery according to an embodiment of the present disclosure is not particularly limited, and may include a positive electrode active material layer formed on at least one surface of a positive electrode current collector.

The positive electrode current collector is not particularly limited, as long as it includes a material that may be used conventionally for a positive electrode current collector. For example, the positive electrode current collector may include aluminum, nickel, or a combination thereof.

The positive electrode active material may include any positive electrode active material that may be used conventionally for a positive electrode of a lithium secondary battery, and particular examples thereof include lithium-containing transition metal oxides. For example, the lithium-containing transition metal oxides include LiCoC₂, LiNiO₂, LiMnO₂, LiMn₂O₄, Li(NiₐCo_{b}Mn_{c})O₂ (0 < a < 1, 0 < b < 1, 0 < c < 1, a + b + c = 1), LiNi_{1-y}Co_{y}O₂, LiCo_{1-y}Mn_{y}O₂, LiNi_{1-y}Mn_{y}O₂ (0 ≤ y < 1), Li(NiₐCo_{b}Mn_{c})O₄ (0 < a < 2, 0 < b < 2, 0 < c < 2, a + b + c =2 ), LiMn_{2-z}Ni_{z}O₄, LiMn_{2-z}Co_{z}O₄ (0 < z < 2), LiCoPO₄, LiFePO₄, or two or more of them. In addition to such oxides, sulfides, selenides and halides may also be used.

The separator applied to the lithium secondary battery according to an embodiment of the present disclosure includes a porous polymer substrate, and a porous coating layer disposed on at least one surface of the porous polymer substrate and including a plurality of inorganic particles and the second binder polymer. The separator is interposed between the positive electrode and the negative electrode and functions to insulate the positive electrode and the negative electrode from each other.

Any porous polymer substrate may be used, as long as it is one used conventionally in the art. For example, the porous polymer substrate may include a polyolefin-based porous polymer membrane or nonwoven web, but is not limited thereto.

Non-limiting examples of the polyolefin-based porous polymer membrane include membranes made of polyolefin polymers, such as polyethylene, including high-density polyethylene, linear low-density polyethylene, low-density polyethylene or ultrahighmolecular weight polyethylene, polypropylene, polybutylene, polypentene, or the like, or two or more of them.

Besides polyolefin-based nonwoven webs, the nonwoven web may include nonwoven webs formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, polyethylene naphthalene, or two or more of them. The nonwoven webs may have a structure of spunbond nonwoven webs or melt blown nonwoven webs including long fibers.

Although there is no particular limitation in the thickness of the porous polymer substrate, the porous polymer substrate may have a thickness of 5-50 µm. Although there is no particular limitation in the pore size and porosity of the porous polymer substrate, the pore size and porosity may be 0.01-50 µm and 10-95%, respectively.

The porosity and pore size of the porous polymer substrate may be determined from scanning electron microscopic (SEM) images, by using a mercury porosimeter or a capillary flow porosimeter, or through the BET6-point method based on nitrogen gas adsorption flow using a porosimetry analyzer (e.g. Belsorp-II mini, Bell Japan Inc.).

The porous coating layer includes inorganic particles and the second binder polymer, and is disposed on at least one surface of the porous polymer substrate in order to improve the mechanical strength of a separator and the safety of a lithium secondary battery.

There is no particular limitation in the inorganic particles, as long as they are electrochemically stable. In other words, there is no particular limitation in the inorganic particles that may be used herein, as long as they cause no oxidation and/or reduction in the range (e.g. 0-5 V based on Li/Li⁺) of operating voltage of an applicable battery. According to an embodiment of the present disclosure, the inorganic particles may include high-dielectric constant inorganic particles having a dielectric constant of 5 or more, or 10 or more, inorganic particles having lithium-ion transportability, or two or more of them. Non-limiting examples of the inorganic particles having a dielectric constant of 5 or more may include any one selected from BaTiO₃, BaSO₄, Pb(Zr,Ti)O₃ (PZT), Pb₁₋ₓLaₓZr_{1-y}Ti_{y}O₃ (PLZT, wherein 0 < x < 1, and 0 < y < 1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, Y₂O₃, SiO₂, Al₂O₃, γ-AlOOH, Al(OH)₃, SiC, TiO₂, or the like, or a mixture of two or more of them. However, the scope of the present disclosure is not limited thereto.

According to an embodiment of the present disclosure, although there is no particular limitation in the particle size of the inorganic particles, the inorganic particles may have a particle size of about 0.01-10 µm or about 0.05-1.0 µm with a view to formation of a coating layer having a uniform thickness and suitable porosity. Herein, the average particle diameter of the inorganic particles means a particle diameter (D₅₀) corresponding to 50% of the accumulated value from smaller particles calculated based on the results of determining the particle size distribution of the particles after classification using a general particle size distribution analyzer. The particle size distribution may be determined by the laser diffraction method.

According to the present invention, the second binder polymer contained in the porous coating layer is the same type as the second binder polymer coated in the cracks formed in the negative electrode active material after an activating.

The content of the inorganic particles and that of the second binder polymer contained in the porous coating layer of the separator may be determined considering the thickness, pores size and porosity of the finished porous coating layer.

The lithium secondary battery including the negative electrode for a lithium secondary battery according to an embodiment of the present disclosure may include a lithium metal secondary battery, lithium-ion secondary battery, lithium polymer secondary battery, lithium-ion polymer secondary battery, or the like.

Although there is no particular limitation in the outer shape of the lithium secondary battery, the lithium secondary battery may be provided in the form of a cylindrical battery using a can, a pouch-type battery, a coin-type battery, or the like.

The lithium secondary battery including the negative electrode for a lithium secondary battery according to an embodiment of the present disclosure shows improved durability, and thus provides improved cycle life.

The lithium secondary battery including the negative electrode for a lithium secondary battery according to an embodiment of the present disclosure may be obtained by the method for manufacturing a lithium secondary battery as described hereinafter, but the scope of the present disclosure is not limited thereto.

**In** another aspect of the present disclosure, there is provided a method for manufacturing a lithium secondary battery, including the steps of:
(S1) preparing a positive electrode, and a preliminary negative electrode including a Si-based negative electrode active material and a first binder polymer;
(S2) coating a slurry for forming a porous coating layer, including inorganic particles, a second binder polymer and a solvent for the second binder polymer, on at least one surface of a porous polymer substrate, followed by drying, to obtain a separator;
(S3) interposing the separator obtained from step (S2) between the positive electrode and the preliminary negative electrode prepared from step (S1), and carrying out lamination to obtain an electrode assembly;
(S4) introducing the electrode assembly obtained from step (S3) into a battery casing, and injecting an electrolyte thereto to obtain a preliminary battery;
(S5) activating the preliminary battery of step (S4);
(S6) heating the preliminary battery of step (S5) so that the second binder polymer is dissolved in the electrolyte, and allowing the preliminary battery to stand; and
(S7) cooling the resultant product of step (S6),
wherein cracks are formed in the negative electrode active material during the activating step (S5), and wherein the first binder polymer is not dissolved in the electrolyte at the heating temperature of step (S6).

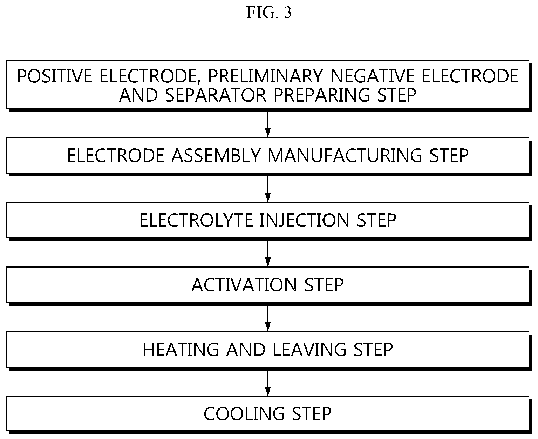

FIG. 3 is a schematic flow chart illustrating the method for manufacturing a lithium secondary battery according to an embodiment of the present disclosure.

Hereinafter, the method for manufacturing a lithium secondary battery according to an embodiment of the present disclosure will be explained in more detail with reference to its main parts.

First, prepared are a positive electrode, and a preliminary negative electrode including a Si-based negative electrode active material and a first binder polymer (S1). The positive electrode may be obtained by any conventional method known to those skilled in the art. For example, a positive electrode slurry containing a positive electrode active material may be prepared, and then the slurry may be coated directly on a positive electrode current collector. Reference will be made to the above description about the positive electrode current collector and the positive electrode active material.

The preliminary negative electrode may be obtained according to any conventional method known to those skilled in the art by mixing a Si-based negative electrode active material, a conductive material, a first binder polymer and a solvent for the first binder polymer to prepare a negative electrode slurry, and coating the slurry on a negative electrode current collector, followed by pressing and drying. Reference will be made to the above description about the Si-based negative electrode active material and the conductive material.

According to the present disclosure, the first binder polymer is characterized in that it is not dissolved in an electrolyte at the heating temperature of step (S6) as described hereinafter. When the first binder polymer is dissolved in an electrolyte at the heating temperature of step (S6) as described hereinafter, the negative electrode active material may be detached from the negative electrode current collector, resulting in an internal short-circuit. In general, the first binder polymer is not particularly limited, as long as it may be used as a binder for a negative electrode and is not dissolved in an electrolyte at the heating temperature of step (S6) as described hereinafter.

According to an embodiment of the present disclosure, the first binder polymer may be an aqueous binder polymer. Particular examples of the first binder polymer include polyvinyl alcohol, carboxymethyl cellulose (CMC), starch, hydroxypropyl cellulose, polyvinyl pyrrolidone, polytetrafluoroethylene, styrene butadiene rubber (SBR), or two or more of them.

According to the present disclosure, the solvent for the first binder polymer may function as a solvent capable of dissolving the first binder polymer or as a dispersion medium not capable of dissolving the first binder polymer but capable of dispersing the same, depending on the particular type of the first binder polymer.

According to an embodiment of the present disclosure, the solvent for the first binder polymer may include an organic solvent, such as N-methyl-2-pyrrolidone (NMP), or water. The negative electrode slurry may have a solid content of 50-95 wt%, or 70-90 wt%.

According to an embodiment of the present disclosure, the Si-based negative electrode active material may be used in an amount of 60-80 wt%, or 70-99 wt% based on the total weight of the negative electrode active material layer.

According to an embodiment of the present disclosure, the conductive material may be used in an amount of 0.1-20 wt%, or 10-15 wt% based on the total weight of the negative electrode active material layer.

According to an embodiment of the present disclosure, the first binder polymer may be used in an amount of 0.1-20 wt%, or 5-10 wt% based on the total weight of the negative electrode active material layer.

According to an embodiment of the present disclosure, the negative electrode slurry may further include an additive, including a thickener, such as carboxymethyl cellulose (CMC).

In addition, a slurry for forming a porous coating layer, including inorganic particles, a second binder polymer and a solvent for the second binder polymer, is coated on at least one surface of a porous polymer substrate, followed by drying, to obtain a separator (S2). The slurry for forming a porous coating layer may be prepared, and coated and dried on the porous polymer substrate by using any conventional method known to those skilled in the art. Reference will be made to the above description about the porous polymer substrate and the inorganic particles.

The second binder polymer is characterized in that it is dissolved in an electrolyte, as the preliminary battery is heated in step (S6) as described hereinafter. In other words, the second binder polymer is not dissolved in an electrolyte at room temperature but is dissolved in the electrolyte at the heating temperature of step (S6) as described hereinafter.

According to an embodiment of the present disclosure, the second binder polymer may include a copolymer of a first monomer derived from vinylidene fluoride (VDF) and a second monomer derived from hexafluoropropylene (HFP), wherein the second monomer may be present in an amount of 20 wt% or more based on 100 wt% of the copolymer. When the second monomer is present within the above-defined range, the copolymer of the first monomer derived from vinylidene fluoride (VDF) with the second monomer derived from hexafluoropropylene (HFP) may be dissolved in the electrolyte with ease in the following step.

According to an embodiment of the present disclosure, the solvent for the second binder polymer may include acetone, tetrahydrofuran, methylene chloride, chloroform, methyl ethyl ketone, dimethyl acetamide, dimethyl formamide, N-methyl-2-pyrrolidone, cyclohexane, or two or more of them.

According to an embodiment of the present disclosure, the slurry for forming a porous coating layer may include the second binder polymer in an amount of 15-25 wt%, or about 20 wt%, based on 100 wt% of the total content of the inorganic particles and the binder polymer. When the second binder polymer is contained in the slurry for forming a porous coating layer within the above-defined range, it is easier the second binder polymer to be dissolved in an electrolyte in such an amount that the second binder polymer may connect the cracks formed in the negative electrode active material. Also, it is easier to prevent an excessive increase in the amount of the second binder polymer that cannot be ejected from the electrolyte upon the cooling of a battery.

Herein, it is stated that the positive electrode and the preliminary negative electrode are prepared prior to the separator. However, the scope of the present disclosure is not limited thereto. For example, the positive electrode and the preliminary negative electrode may be prepared after preparing the separator. **In** addition, the positive electrode and the preliminary negative electrode may be prepared simultaneously with the separator.

Then, the separator prepared in step (S2) is interposed between the positive electrode and the preliminary negative electrode prepared in step (S1), and lamination is carried out to obtain an electrode assembly (S3). The electrode assembly may be obtained by any conventional method known to those skilled in the art.

According to an embodiment of the present disclosure, the lamination may be carried out at a temperature of 25-150°C, or under a pressure of 100-400 kgf/cm², or under both conditions.

After that, the electrode assembly obtained from step (S3) is received in a battery casing, and an electrolyte is injected thereto to obtain a preliminary battery (S4). The preliminary battery may be obtained by using any conventional method known to those skilled in the art.

According to an embodiment of the present disclosure, the battery casing may be a pouch-like casing including a receiving portion in which the electrode assembly and the electrolyte are received, and a sealing portion configured to seal the battery casing to prevent the electrode assembly and the electrode from being exposed to the outside, but is not limited thereto.

The electrolyte may be injected before the battery casing is sealed after the electrode assembly is received in the battery casing, or may be injected after sealing the battery casing. The electrolyte may be injected by using any conventional method known to those skilled in the art.

According to the present disclosure, the electrolyte includes a lithium salt as an electrolyte and an organic solvent capable of dissolving the lithium salt. The lithium salt may be one used conventionally for an electrolyte for a lithium secondary battery with no particular limitation, and may be a salt having a structure of A⁺B⁻. For example, A⁺ includes an alkali metal cation such as Li⁺, Na⁺, K⁺ or a mixture of two or more of them, and B⁻ includes an anion such as PF₆⁻, BF₄⁻, F⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a mixture of two or more of them.

The organic solvent may be one used conventionally for an electrolyte for a lithium secondary battery with no particular limitation, and particular examples thereof include ethers, esters, linear carbonates, cyclic carbonates, or a mixture of two or more of them. Typically, the organic solvent may include a cyclic carbonate, a linear carbonate, or a carbonate compound as a mixture thereof.

Particular examples of the cyclic carbonate compound include, but are not limited to: ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, or halides thereof, or a mixture of two or more of them.

Particular examples of the halides include, but are not limited to: fluoroethylene carbonate (FEC), or the like.

Particular examples of the linear carbonate compound include, but are not limited to: dimethyl carbonate (DMC), diethyl carbonate (DEC), dipropyl carbonate, ethyl methyl carbonate (EMC), methyl propyl carbonate, ethyl propyl carbonate, or a mixture of two or more of them.

In addition, particular examples of the ethers of the organic solvents include, but are not limited to: dimethyl ether, diethyl ether, dipropyl ether, methyl ethyl ether, methyl propyl ether, ethyl propyl ether, or a mixture of two or more of them.

Particular examples of the esters of the organic solvents include, but are not limited to: methyl acetate, ethyl acetate, propyl acetate, methyl propionate, ethyl propionate, γ-butyrolactone, γ-valerolactone, γ-caprolactone, σ-valerolactone, ε-caprolactone, or a mixture of two or more of them.

Then, the preliminary battery of step (S4) is activated (S5).

Step (S5) is a step of charging and discharging the preliminary battery to which the electrolyte is injected so that the preliminary battery may be activated. As the preliminary battery is charged, lithium is intercalated to the Si-based negative electrode active material to cause volumetric swelling. Due to the volumetric swelling, cracks are formed in the negative electrode active material.

According to an embodiment of the present disclosure, in step (S5), the preliminary battery may be charged to 30-100%, 50-100%, or 80-100% of the battery capacity, and may be discharged to 50-0%, or 30-0% of the battery capacity.

According to an embodiment of the present disclosure, the charge/discharge may be based on 0.1 C rate, and the preliminary battery may be charged in a constant current (CC)/constant voltage (CV) mode and discharged in a CC mode. The charge/discharge cut-off voltage may be set between 2.3 V and 4.5 V, or between 3.2 V and 4.2 V. However, the charge/discharge conditions, such as charge/discharge modes, cut-off voltage ranges and C-rate, are not limited to the above-defined range, and an adequate range or condition may be determined considering the electrode active material, battery type and battery characteristics.

According to an embodiment of the present disclosure, the activating step may be carried out under a pressurized condition by applying a predetermined pressure. For example, the pressure may range from 1 kN to 20 kN.

After that, the preliminary battery of step (S5) is heated so that the second binder polymer is dissolved in the electrolyte, and the preliminary battery including the electrolyte containing the second binder polymer dissolved therein is allowed to stand (S6).

Step (S6) is a step of increasing the temperature of the preliminary battery to a specific temperature where the second binder polymer can be dissolved in the electrolyte, or higher temperature, so that the second binder polymer present in the separator, particularly in the porous coating layer of the separator, may be dissolved in the electrolyte, and stabilizing the preliminary battery in such a manner that the electrolyte containing the second binder polymer dissolved therein may be diffused uniformly into the electrode assembly. During this step, the electrolyte containing the second binder polymer dissolved therein infiltrates into the cracks formed in the negative electrode active material after step (S5). Since it is required for the electrolyte containing the second binder polymer dissolved therein to infiltrate into the cracks formed in the negative electrode active material after step (S5), step (S6) should be carried out after step (S5).

As the cracks formed in the negative electrode active material after step (S5) are increased in size, it is more likely that the electrolyte containing the second binder polymer dissolved therein is present in the cracks. Therefore, a larger amount of the second binder polymer ejected from the electrolyte after the cooling step as described hereinafter may be present in the cracks formed in the negative electrode active material after step (S5).

Even though the second binder polymer present in the separator is dissolved due to the heating of the preliminary battery in step (S6), the positive electrode, the preliminary negative electrode and the separator are laminated so that the inorganic particles contained in the separator may be prevented from being detached from the porous polymer substrate. Since it is required for the inorganic particles contained in the separator to be fixed on the porous polymer substrate even after the second binder polymer is dissolved in the electrolyte, step (S6) should be carried out after step (S3).

The heating temperature of the preliminary battery may vary depending on the size and shape of the battery. According to an embodiment of the present disclosure, the heating temperature of the preliminary battery in step (S6) may be 70-90°C, 75-85°C, or about 80°C. When the heating temperature of the preliminary battery falls within the above-defined range, the second binder polymer may be dissolved sufficiently in the electrolyte, and may be dissolved in the electrolyte at a temperature lower than the boiling point of the organic solvent contained in the electrolyte. Therefore, the second binder polymer may be dissolved in the electrolyte with ease in an amount sufficient to connect the cracks formed in the negative electrode active material after step (S5). **In** addition, although the second binder polymer may be dissolved in the electrolyte, it is easier to prevent degradation of the performance of a lithium secondary battery caused by a temperature near the shut-down temperature, where the pores of the separator are blocked, and a decrease in ion conductivity.

According to an embodiment of the present disclosure, when the heating temperature of the preliminary battery in step (S6) is 70-90°C, the first binder polymer may not be dissolved in the electrolyte at a temperature of 90°C or lower. The first binder polymer may be dissolved in the electrolyte at a temperature higher than 90°C. Herein, the second binder polymer is not dissolved in the electrolyte at room temperature, but may be dissolved in the electrolyte at a temperature of 70°C or higher.

The preliminary battery may be allowed to stand for a time that varies depending on the size and shape of the battery. According to an embodiment of the present disclosure, the preliminary battery may be allowed to stand for 24 hours more, 48 hours or more, or 72 hours or more. When the preliminary battery is allowed to stand for the above-defined range of time, it is possible to ensure a time sufficient for the electrolyte containing the second binder polymer dissolved therein to infiltrate uniformly into the electrode assembly.

According to an embodiment of the present disclosure, step (S6) may be carried out under a pressurized condition by applying a predetermined pressure. For example, the pressure may range from 1 kN to 20 kN.

According to an embodiment of the present disclosure, the content of the second binder polymer dissolved in the electrolyte may be 60-95 wt% based on the amount of the second binder polymer contained in the slurry for forming a porous coating layer during the manufacture of the separator. When the content of the second binder polymer dissolved in the electrolyte satisfies the above-defined range, it is easier to prevent the inorganic particles from being detached from the porous polymer substrate and to dissolve the second binder polymer in an amount sufficient to connect the cracks formed in the negative electrode active material.

According to an embodiment of the present disclosure, the method may further include a degassing step for removing the gases generated in steps (S5) and (S6).

After that, the resultant product of step (S6) is cooled to obtain a finished lithium secondary battery (S7).

In step (S7), the second binder polymer dissolved in the electrolyte is ejected from the electrolyte inserted in the cracks formed in the negative electrode active material after step (S6), as the solubility of the second binder polymer to the electrolyte is reduced due to a decrease in temperature. The ejected second binder polymer connects the cracks formed in the negative electrode active material after step (S5) to improve the durability of the negative electrode and the life characteristics of a lithium secondary battery including the negative electrode.

According to an embodiment of the present disclosure, in step (S7), the preliminary battery may be cooled to 15-45°C, 20-30°C, or about 25°C. For example, the preliminary battery may be cooled to room temperature.

As described above, it is possible to obtain a negative electrode for a lithium secondary battery having improved durability by the method for manufacturing a lithium secondary battery according to an embodiment of the present disclosure.

In addition, it is possible to obtain a lithium secondary battery having improved life characteristics by using a negative electrode for a lithium secondary battery having improved durability by the method for manufacturing a lithium secondary battery according to an embodiment of the present disclosure.

In the lithium secondary battery obtained by the above-described method, the second binder polymer contained in the separator is dissolved, and thus may remain in the separator in an amount significantly reduced as compared to the amount used in the step of preparing the separator. Even though the content of the second binder polymer remaining in the separator is reduced, the separator, the positive electrode and the preliminary negative electrode are laminated so that the inorganic particles contained in the separator may be prevented from being detached from the porous polymer substrate.

The second binder polymer is dissolved in the electrolyte in step (S6), and may remain in the separator of the finished lithium secondary battery in an amount significantly reduced as compared to the initial content added to the slurry for forming a porous coating layer during the manufacture of the separator. According to an embodiment of the present disclosure, the second binder polymer may be present in an amount of 1-5 wt% based on 100 wt% of the total content of the inorganic particles and the second binder polymer in the separator contained in the resultant product of step (S7).

### MODE FOR DISCLOSURE

Hereinafter, the present disclosure will be explained in detail with reference to Examples. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

### Manufacture of Positive Electrode

First, 97.5 wt% of Li(Ni_{0.333}Co_{0.334}Mn_{0.333})O₂ (Sigma-Aldrich) as a positive electrode active material, 1.0 wt% of carbon black (Timcal) as a conductive material and 1.5 wt% of PVDF (Solvey) as a binder polymer were added to N-methyl pyrrolidone at 25°C to prepare a positive electrode slurry. Then, 600 mg/25 m² of the positive electrode slurry was coated on the top surface of aluminum foil having a thickness of 15 µm through slot-die coating to obtain a positive electrode. The positive electrode had a thickness of 162 µm.

### Manufacture of Preliminary Negative Electrode

First, 80 wt% of Si particles (Sigma-Aldrich, average particle diameter (D₅₀): 2.3 µm) as a negative electrode active material, 10 wt% of carbon black (Timcal) as a conductive material and 10 wt% of carboxymethyl cellulose (Diacell) as a first binder polymer were added to water at 25°C to prepare a negative electrode slurry. Then, 100 mg/25 m² of the negative electrode slurry was coated on the top surface of copper foil having a thickness of 8 µm through slot-die coating to obtain a preliminary negative electrode. The preliminary negative electrode had a thickness of 58 µm.

### Manufacture of Separator

First, 80 wt% of Al₂O₃ (Aldrich-Aldrich, average particle diameter: 500 nm) as inorganic particles and 20 wt% of PVDF-HFP (Sigma-Aldrich, 20 wt% of HFP-derived monomer based on 100 wt% of PVDF-HFP) as a second binder polymer were added to N-methyl pyrrolidone to prepare a slurry for forming a porous coating layer. The slurry for forming a porous coating layer was coated on the top surface of a polyethylene film (Toray) having a thickness of 9 µm through dip coating. Then, phase separation was carried out under a relative humidity of 50% to obtain a separator. The finished separator had a thickness of 17.5 µm.

### Manufacture of Lithium Secondary Battery

The separator obtained as described above was interposed between the positive electrode and the preliminary negative electrode obtained as described above, and lamination was carried out at 25°C under a pressure of 250 kgf/cm² to obtain an electrode assembly. The electrode assembly was received in a battery casing, and an electrolyte including 1.0 M LiPF₆ lithium salt dissolved in an organic solvent containing a mixture of EC:DEC at a volume ratio of 3:7 was injected thereto to obtain a preliminary battery.

The preliminary battery was subjected to the first cycle at 0.15 C/0.33 C, and further subjected to one more cycle at 0.33 C/0.33 C to perform 2 cycles of activating. The preliminary battery was charged in a constant current (CC)/constant voltage (CV) mode and discharged in a CC mode, wherein the CV cut-off current was 0.05 C.

The activated preliminary battery was allowed to stand at 75°C for 24 hours so that the second binder polymer was dissolved in the electrolyte. Then, the preliminary battery was cooled to 25°C to finish a lithium secondary battery.

### Example 2

A lithium secondary battery was obtained in the same manner as Example 1, except that the activated preliminary battery was allowed to stand at 80°C.

### Example 3

A lithium secondary battery was obtained in the same manner as Example 1, except that the activated preliminary battery was allowed to stand at 85°C.

### Example 4

### Manufacture of Positive Electrode, Preliminary Negative Electrode and Separator

A positive electrode, a preliminary negative electrode and a separator were obtained in the same manner as Example 1, except that 75 wt% of the inorganic particles and 25 wt% of the second binder polymer were used.

### Manufacture of Lithium Secondary Battery

A lithium secondary battery was obtained in the same manner as Example 2.

### Example 5

### Manufacture of Positive Electrode, Preliminary Negative Electrode and Separator

A positive electrode, a preliminary negative electrode and a separator were obtained in the same manner as Example 1, except that 85 wt% of the inorganic particles and 15 wt% of the second binder polymer were used.

### Manufacture of Lithium Secondary Battery

A lithium secondary battery was obtained in the same manner as Example 2.

### Comparative Example 1

A lithium secondary battery was obtained in the same manner as Example 1, except that the step of heating the activated preliminary battery to dissolve the second binder polymer in the electrolyte and cooling the preliminary battery after the activated preliminary battery were not carried out.

### Test Example 1: Analysis of Difference in Thickness of Separator before Assemblage of Electrode Assembly and Separator of Finished Lithium Secondary Battery

The separator before the assemblage of an electrode assembly, obtained from Example 1, i.e. the separator obtained from step (S2) was prepared. In addition, the separator contained in the finished battery according to Example 1, i.e. the separator contained in the resultant product of step (S7) was prepared. The separator contained in the finished lithium secondary battery according to Example 1 was obtained by disassembling it from the finished lithium secondary battery according to Example 1.

The separator before the assemblage of an electrode assembly and the separator contained in the finished lithium secondary battery according to Example 1 were observed in terms of a difference in thickness.

It can be seen that the separator before the assemblage of an electrode assembly, obtained from Example 1, has a thickness of 17.5 µm.

On the contrary, it can be seen that the separator contained in the finished lithium secondary battery according to Example 1 has a thickness of 14.89 µm.

Therefore, it can be seen that the second binder polymer contained in the separator is dissolved in the electrolyte through the heating step.

### Test Example 2: Determination of Content of Second Binder Polymer Remaining in Separator Contained in Lithium Secondary Battery

The content of the second binder polymer remaining in the separator contained in each of the lithium secondary batteries according to Examples 1-5 and Comparative Example 1, i.e. the separator contained in the resultant product of step (S7), was determined. The results are shown in the following Table 1.

The content of the second binder polymer remaining in the separator contained in the finished lithium secondary battery was determined as follows.

The separator obtained by disassembling each of the finished lithium secondary batteries according to Examples 1-5 and Comparative Example 1 was prepared.

Thermogravimetry analysis (TGA) was used to determine a change in weight of the separator when heating and cooling were repeated from 25°C to 700°C at a rate of 10°C/min, and then the content of the second binder polymer remaining in the separator contained in the finished lithium secondary battery was calculated therefrom. The content of the second binder polymer is represented based on the total content of the inorganic particles and the second binder polymer remaining in the separator.

**[Table 1]**

| | Ex. 1 | Ex. 2 | Ex. 3 | Ex. 4 | Ex. 5 | Comp. Ex. 1 |
|---|---|---|---|---|---|---|
| Content of second binder polymer remaining in separator contained in finished lithium secondary battery (wt%) | 3.5 | 2.0 | 1.9 | 2.6 | 1.4 | 19.7 |

As can be seen from Table 1, the content of the second binder polymer remaining in the separator contained in each of the finished batteries according to Examples 1-5 is significantly reduced as compared to the content of the second binder polymer contained in the separator before the assemblage of an electrode assembly, i.e. the separator not subjected to the heating step. It can be inferred from the result that the second binder polymer contained in the separator in each of the finished batteries according to Examples 1-5 is dissolved in the electrolyte through the heating step, and the electrolyte containing the second binder polymer dissolved therein infiltrates to the whole of the battery so that the second binder polymer is coated in the cracks of the negative electrode active material formed after the activating step.

On the contrary, the content of the second binder polymer remaining in the separator contained in the finished battery according to Comparative Example 1 shows little difference as compared to the content of the second binder polymer contained in the separator before the assemblage of an electrode assembly, i.e. the separator not subjected to the heating step. It can be inferred from the result that the second binder polymer contained in the separator in the finished battery according to Comparative Example 1 is not dissolved in the electrolyte, and thus the second binder polymer cannot be coated in the cracks of the negative electrode active material formed after the activating step.

### Test Example 3: Evaluation of Cycle Life of Lithium Secondary Battery

Each of the lithium secondary batteries according to Examples 1-5 and Comparative Example 1 was subjected to charge/discharge cycles in which the lithium secondary battery was charged continuously to 4.2 V at 1.0 C in a constant current mode, and then discharged at 0.5 C. Then, the capacity retention after 100 charge/discharge cycles was determined. The results are shown in the following Table 2.

**[Table 2]**

| | Capacity retention after 100 cycles (%) |
|---|---|
| Example 1 | 81.9 |
| Example 2 | 82.5 |
| Example 3 | 83.2 |
| Example 4 | 84.6 |
| Example 5 | 80.1 |
| Comparative Example 1 | 68.2 |

As can be seen from Table 2, each of the lithium secondary batteries according to Examples 1-5 shows a capacity retention of 80% or higher even after 100 cycles.

Particularly, in the case of Examples 1-3, it can be seen that the capacity retention after 100 cycles is increased, as the heating temperature of the preliminary battery is increased. It is thought that this is because the solubility of the second binder polymer to the electrolyte is increased, as the heating temperature of the preliminary battery is increased, and thus a larger amount of the second binder polymer may be coated in the cracks of the negative electrode active material.

Referring to Examples 2, 4 and 5, it can be seen that as the content of the second binder polymer contained in the slurry for forming a porous coating layer is increased, the capacity retention after 100 cycles is increased. It is thought that this is because the content of the second binder polymer dissolved in the electrolyte is increased, as the content of the second binder polymer contained in the slurry for forming a porous coating layer is increased.

On the contrary, it can be seen that the lithium secondary battery according to Comparative Example 1 shows a capacity retention after 100 cycles reduced to less than 80%. It is thought that this is because the lithium secondary battery according to Comparative Example 1 is not subjected to a step of heating the preliminary battery, and thus the second binder polymer is not dissolved in the electrolyte and is not coated in the cracks formed in the negative electrode active material so that the negative electrode active material may be detached partially from the negative electrode current collector and/or the negative electrode active material particles, resulting in a decrease in the capacity of the lithium secondary battery.

## Claims

1. A lithium secondary battery, comprising:
a positive electrode;
a negative electrode; and
a separator interposed between the positive electrode and the negative electrode, and comprising a porous polymer substrate, and a porous coating layer disposed on at least one surface of the porous polymer substrate and comprising a plurality of inorganic particles and a second binder polymer;
wherein the negative electrode comprises:
a negative electrode current collector 10; and
a negative electrode active material layer 20 disposed on at least one surface of the negative electrode current collector 10, and comprising a Si-based negative electrode active material 21, a conductive material 22 and a first binder polymer 23,
wherein the Si-based negative electrode active material 21 has cracks 24 formed after activating,
**characterized in that**:
the second binder polymer 25 is coated in the cracks 24, and the first binder polymer 23 and the second binder polymer 25 are heterogeneous,
wherein the first binder polymer 23 comprises polyvinyl alcohol, carboxymethyl cellulose (CMC), starch, hydroxypropyl cellulose, polyvinyl pyrrolidone, polytetrafluoroethylene, styrene butadiene rubber (SBR), or two or more of them; and
wherein the second binder polymer 25 comprises a copolymer of a first monomer derived from vinylidene fluoride (VDF) and a second monomer derived from hexafluoropropylene (HFP), and the second monomer is present in an amount of 20 wt% or more based on 100 wt% of the copolymer.

2. The lithium secondary battery according to claim 1, wherein the Si-based negative electrode active material 21 comprises Si, SiOₓ (1≤x≤2), Si/C, or two or more of them.

3. A method for manufacturing a lithium secondary battery, comprising the steps of:
(S1) preparing a positive electrode, and a preliminary negative electrode comprising a Si-based negative electrode active material 21 and a first binder polymer 23;
(S2) coating a slurry for forming a porous coating layer, comprising inorganic particles, a second binder polymer 25 and a solvent for the second binder polymer, on at least one surface of a porous polymer substrate, followed by drying, to obtain a separator;
(S3) interposing the separator obtained from step (S2) between the positive electrode and the preliminary negative electrode prepared from step (S1), and carrying out lamination to obtain an electrode assembly;
(S4) introducing the electrode assembly obtained from step (S3) into a battery casing, and injecting an electrolyte thereto to obtain a preliminary battery;
(S5) activating the preliminary battery of step (S4);
(S6) heating the preliminary battery of step (S5) so that the second binder polymer 25 is dissolved in the electrolyte, and allowing the preliminary battery to stand; and
(S7) cooling the resultant product of step (S6),
wherein cracks are formed in the negative electrode active material during the activating step (S5), and
wherein the first binder polymer 23 is not dissolved in the electrolyte at the heating temperature of step (S6).

4. The method for manufacturing a lithium secondary battery according to claim 3, wherein the heating temperature of step (S6) is 70-90°C.

5. The method for manufacturing a lithium secondary battery according to claim 3, wherein the second binder polymer 25 comprises a copolymer of a first monomer derived from vinylidene fluoride (VDF) and a second monomer derived from hexafluoropropylene (HFP), and
the second monomer is present in an amount of 20 wt% or more based on 100 wt% of the copolymer.

6. The method for manufacturing a lithium secondary battery according to claim 3, wherein the first binder polymer 23 comprises polyvinyl alcohol, carboxymethyl cellulose (CMC), starch, hydroxypropyl cellulose, polyvinyl pyrrolidone, polytetrafluoroethylene, styrene butadiene rubber (SBR), or two or more of them.

7. The method for manufacturing a lithium secondary battery according to claim 3, wherein the second binder polymer 25 is used in the slurry for forming a porous coating layer in an amount of 15-25 wt% based on 100 wt% of the combined weight of the inorganic particles and the second binder polymer 25.

## Patentansprüche

1. Lithiumsekundärbatterie, umfassend:
eine positive Elektrode;
eine negative Elektrode; und
einen Separator, der zwischen der positiven Elektrode und der negativen Elektrode geschaltet ist und ein poröses Polymersubstrat und eine poröse Beschichtung umfasst, die auf mindestens einer Oberfläche des porösen Polymersubstrats angeordnet ist und eine Vielzahl an anorganischen Teilchen und ein zweites Bindemittelpolymer umfasst;
worin die negative Elektrode umfasst:
einen Stromabnehmer für eine negative Elektrode 10; und
eine Aktivmaterialschicht für eine negative Elektrode 20, die auf mindestens einer Oberfläche des Stromabnehmers für eine negative Elektrode 10 angeordnet ist und ein Aktivmaterial für eine negative Elektrode auf Si-Basis 21, ein leitfähiges Material 22 und ein erstes Bindemittelpolymer 23 umfasst,
worin das Aktivmaterial für eine negative Elektrode auf Si-Basis 21 nach der Aktivierung gebildete Risse 24 aufweist,
**dadurch gekennzeichnet, dass**:
das zweite Bindemittelpolymer 25 in den Rissen 24 beschichtet ist und das erste Bindemittelpolymer 23 und das zweite Bindemittelpolymer 25 heterogen sind,
worin das erste Bindemittelpolymer 23 Polyvinylalkohol, Carboxymethylcellulose (CMC), Stärke, Hydroxypropylcellulose, Polyvinylpyrrolidon, Polytetrafluorethylen, Styrol-Butadien-Kautschuk (SBR) oder zwei oder mehr von diesen umfasst; und
worin das zweite Bindemittelpolymer 25 ein Copolymer aus einem ersten von Vinylidenfluorid (VDF) abgeleiteten Monomer und einem zweiten von Hexafluorpropylen (HFP) abgeleiteten Monomer umfasst, und das zweite Monomer, basierend auf 100 Gew.-% des Copolymers, in einer Menge von 20 Gew.-% oder mehr vorhanden ist.

2. Lithiumsekundärbatterie gemäß Anspruch 1, worin das Aktivmaterial für eine negative Elektrode auf Si-Basis 21 Si, SiOₓ (1≤x≤2), Si/C oder zwei oder mehr von diesen umfasst.

3. Verfahren zur Herstellung einer Lithiumsekundärbatterie, umfassend die Schritte:
(S1) das Bereitstellen einer positiven Elektrode und einer vorläufigen negativen Elektrode, die ein Aktivmaterial für eine negative Elektrode auf Si-Basis 21 und ein erstes Bindemittelpolymer 23 umfasst;
(S2) das Beschichten einer Aufschlämmung zur Bildung einer porösen Beschichtung, umfassend anorganische Teilchen, ein zweites Bindemittelpolymer 25 und ein Lösungsmittel für das zweite Bindemittelpolymer, auf mindestens eine Oberfläche eines porösen Polymersubstrats, gefolgt von Trocknen, so dass ein Separator erhalten wird;
(S3) das Schalten des in Schritt (S2) erhaltenen Separators zwischen der in Schritt (S1) erhaltenen positiven Elektrode und der vorläufigen negativen Elektrode und das Laminieren, so dass eine Elektrodenanordnung erhalten wird;
(S4) das Einbringen der in Schritt (S3) erhaltenen Elektrodenanordnung in ein Batteriegehäuse und das Injizieren eines Elektrolyten, so dass eine vorläufige Batterie erhalten wird;
(S5) das Aktivieren der vorläufigen Batterie von Schritt (S4);
(S6) das Erwärmen der vorläufigen Batterie von Schritt (S5), so dass das zweite Bindemittelpolymer 25 im Elektrolyten gelöst ist, und das Stehenlassen der vorläufigen Batterie; und
(S7) das Kühlen des aus Schritt (S6) resultierenden Produkts,
worin während des Aktivierungsschritts (S5) Risse im Aktivmaterial für eine negative Elektrode gebildet werden und
worin das erste Bindemittelpolymer 23 bei der Erwärmungstemperatur von Schritt (S6) nicht im Elektrolyten gelöst ist.

4. Verfahren zur Herstellung einer Lithiumsekundärbatterie gemäß Anspruch 3, worin die Erwärmungstemperatur von Schritt (S6) 70-90°C beträgt.

5. Verfahren zur Herstellung einer Lithiumsekundärbatterie gemäß Anspruch 3, worin das zweite Bindemittelpolymer 25 ein Copolymer aus einem ersten von Vinylidenfluorid (VDF) abgeleiteten Monomer und einem zweiten von Hexafluorpropylen (HFP) abgeleiteten Monomer umfasst,
und das zweite Monomer, basierend auf 100 Gew.-% des Copolymers, in einer Menge von 20 Gew.-% oder mehr vorhanden ist.

6. Verfahren zur Herstellung einer Lithiumsekundärbatterie gemäß Anspruch 3, worin das erste Bindemittelpolymer 23 Polyvinylalkohol, Carboxymethylcellulose (CMC), Stärke, Hydroxypropylcellulose, Polyvinylpyrrolidon, Polytetrafluorethylen, Styrol-Butadien-Kautschuk (SBR) oder zwei oder mehr von diesen umfasst.

7. Verfahren zur Herstellung einer Lithiumsekundärbatterie gemäß Anspruch 3, worin das zweite Bindemittelpolymer 25 in der Aufschlämmung zum Bilden einer porösen Beschichtung in einer Menge von 15-25 Gew.-%, basierend auf 100 Gew.-% des kombinierten Gewichts der anorganischen Teilchen und des zweiten Bindemittelpolymers 25, verwendet wird.

## Revendications

1. Batterie secondaire au lithium, comprenant :
une électrode positive ;
une électrode négative ; et
un séparateur interposé entre l'électrode positive et l'électrode négative, et comprenant un substrat polymère poreux, et une couche de revêtement poreuse disposée sur au moins une surface du substrat polymère poreux et comprenant une pluralité de particules inorganiques et un second polymère liant ;
dans laquelle l'électrode négative comprend :
un collecteur de courant d'électrode négative 10 ; et
une couche de matériau actif d'électrode négative 20 disposée sur au moins une surface du collecteur de courant d'électrode négative 10, et comprenant un matériau actif d'électrode négative à base de Si 21, un matériau conducteur 22 et un premier polymère liant 23,
dans laquelle le matériau actif d'électrode négative à base de Si 21 présente des fissures 24 formées après activation,
**caractérisée en ce que** :
le second polymère liant 25 est revêtu dans les fissures 24, et le premier polymère liant 23 et le second polymère liant 25 sont hétérogènes,
dans laquelle le premier polymère liant 23 comprend de l'alcool polyvinylique, de la carboxyméthylcellulose (CMC), de l'amidon, de l'hydroxypropylcellulose, de la polyvinylpyrrolidone, du polytétrafluoroéthylène, du caoutchouc styrène butadiène (SBR), ou deux ou plus d'entre eux ; et
dans laquelle le second polymère liant 25 comprend un copolymère d'un premier monomère dérivé du fluorure de vinylidène (VDF) et d'un second monomère dérivé de l'hexafluoropropylène (HFP), et le second monomère est présent dans une quantité de 20 % en poids ou plus sur la base de 100 % en poids du copolymère.

2. Batterie secondaire au lithium selon la revendication 1, dans laquelle le matériau actif d'électrode négative à base de Si 21 comprend Si, SiOₓ (1 ≤ x ≤ 2), Si/C, ou deux ou plus d'entre eux.

3. Procédé de fabrication d'une batterie secondaire au lithium, comprenant les étapes consistant à :
(S1) préparer une électrode positive, et une électrode négative préliminaire comprenant un matériau actif d'électrode négative à base de Si 21 et un premier polymère liant 23 ;
(S2) revêtir une suspension pour former une couche de revêtement poreuse, comprenant des particules inorganiques, un second polymère liant 25 et un solvant pour le second polymère liant, sur au moins une surface d'un substrat polymère poreux, suivi d'un séchage, pour obtenir un séparateur ;
(S3) interposer le séparateur obtenu à partir de l'étape (S2) entre l'électrode positive et l'électrode négative préliminaire préparée à partir de l'étape (S1), et effectuer une stratification pour obtenir un ensemble électrode ;
(S4) introduire l'ensemble électrode obtenu à partir de l'étape (S3) dans un boîtier de batterie, et y injecter un électrolyte pour obtenir une batterie préliminaire ;
(S5) activer la batterie préliminaire de l'étape (S4) ;
(S6) chauffer la batterie préliminaire de l'étape (S5) de sorte que le second polymère liant 25 soit dissous dans l'électrolyte, et laisser la batterie préliminaire au repos ; et
(S7) refroidir le produit résultant de l'étape (S6),
dans lequel des fissures sont formées dans le matériau actif d'électrode négative pendant l'étape d'activation (S5), et
dans lequel le premier polymère liant 23 n'est pas dissous dans l'électrolyte à la température de chauffage de l'étape (S6).

4. Procédé de fabrication d'une batterie secondaire au lithium selon la revendication 3, dans lequel la température de chauffage de l'étape (S6) est comprise entre 70 °C et 90 °C.

5. Procédé de fabrication d'une batterie secondaire au lithium selon la revendication 3, dans lequel le second polymère liant 25 comprend un copolymère d'un premier monomère dérivé du fluorure de vinylidène (VDF) et d'un second monomère dérivé de l'hexafluoropropylène (HFP), et
le second monomère est présent dans une quantité de 20 % en poids ou plus sur la base de 100 % en poids du copolymère.

6. Procédé de fabrication d'une batterie secondaire au lithium selon la revendication 3, dans lequel le premier polymère liant 23 comprend de l'alcool polyvinylique, de la carboxyméthylcellulose (CMC), de l'amidon, de l'hydroxypropylecellulose, de la polyvinylpyrrolidone, du polytétrafluoroéthylène, du caoutchouc styrène butadiène (SBR), ou deux ou plus d'entre eux.

7. Procédé de fabrication d'une batterie secondaire au lithium selon la revendication 3, dans lequel le second polymère liant 25 est utilisé dans la suspension pour former une couche de revêtement poreuse dans une quantité comprise entre 15 % en poids et 25 % en poids sur la base de 100 % en poids du poids combiné des particules inorganiques et du second polymère liant 25.
